# EUROPEAN PATENT SPECIFICATION

(11) **EP 3 694 034 B1**
(45) Date of publication and mention of the grant of the patent: **30.08.2023**
(21) Application number: 20154000.2
(22) Date of filing: 28.01.2020
(51) Int. Cl.: H01M 10/052, H01M 10/0562, H01M 4/485, H01M 4/02

(54) **ANODE LAYER AND ALL SOLID STATE BATTERY**
ANODENSCHICHT UND FESTKÖRPERBATTERIE
COUCHE D'ANODE ET BATTERIE ENTIÈREMENT À SEMI-CONDUCTEUR

(30) Priority: 05.02.2019 JP 2019018660
(43) Date of publication of application: 12.08.2020
(73) Proprietor: TOYOTA JIDOSHA KABUSHIKI KAISHA, Toyota-shi, Aichi-ken, 471-8571 (JP)
(72) Inventor: HASEGAWA, Hajime, Toyota-shi, Aichi-ken, 471-8571 (JP); NISHIMURA, Hideaki, Toyota-shi, Aichi-ken, 471-8571 (JP); HAMA, Shigenori, Toyota-shi, Aichi-ken, 471-8571 (JP); MIZUTANI, Satoshi, Toyota-shi, Aichi-ken, 471-8571 (JP); TOMITA, Masataka, Toyota-shi, Aichi-ken, 471-8571 (JP)
(74) Representative: Winter, Brandl - Partnerschaft mbB

(56) References cited:
- WO-A1-2013/140941
- CN-A- 109 244 443
- GRIFFITH KENT J ET AL: "Niobium tungsten oxides for high-rate lithium-ion energy storage", NATURE, MACMILLAN JOURNALS LTD, LONDON, vol. 559, no. 7715, 25 July 2018 (2018-07-25), pages 556-563, XP036553110, ISSN: 0028-0836, DOI: 10.1038/S41586-018-0347-0 [retrieved on 2018-07-25]
- YAN LEI ET AL: "W3Nb14O44 nanowires: Ultrastable lithium storage anode materials for advanced rechargeable batteries", ENERGY STORAGE MATERIALS, vol. 16, 12 September 2018 (2018-09-12), pages 535-544, XP55893066, ISSN: 2405-8297, DOI: 10.1016/j.ensm.2018.09.008

## Description

### Technical Field

The present disclosure relates to an anode layer and an all solid state battery.

### Background Art

In recent years, the development of a battery has been actively carried out. For example, the development of a battery used for an electric automobile or a hybrid automobile has been advanced in the automobile industry. A battery usually comprises a cathode layer, an anode layer, and an electrolyte layer formed between the cathode layer and the anode layer. An all solid state battery comprising a solid electrolyte layer is known as one of the important batteries.

An active material (NWO) comprising a Nb element, a W element, and an O element is known as an active material to be used for a battery. For example, Non-Patent Literature 1 discloses Nb₁₆W₅O₅₅ and Nb₁₈W₁₆O₉₃. Also, Non-Patent Literature 2 discloses W₉Nb₈O₄₇ and W₇Nb₄O₃₁. Further, Non-Patent Literature 3 discloses W₃Nb₁₄O₄₄. Non-patent Literature 4 relates to W₃Nb₁₄O₄₄ nanowires as anode materials for rechargeable batteries.

Additionally, patent literature 1 discloses a collector whereby internal resistance and production costs can be reduced, an electrode and a non-aqueous electrolyte secondary battery. A metal three-dimensional, mesh-like porous body for use as a collector, comprising a sheet-shaped metal three-dimensional, mesh-like porous body, an electrode using same and a non-aqueous electrolyte secondary battery comprising the electrode. The porosity of the sheet-shaped metal three-dimensional, mesh-like porous body is 90%-98%, and the 30% cumulative pore diameter (D30) of the sheet-shaped metal three-dimensional, mesh-like porous body, calculated by performing pore diameter measurement using the bubble-point method, is 20-100 pm. Patent Literature 2 aims for the provision of a lithium ion battery anode material having good electrochemical performance and avoiding lithium dendrite problems.

### Citation List

### Non-patent and patent Literatures

Non-patent Literature 1: Kent J. Griffith et al., "Niobium tungsten oxides for high-rate lithium-ion energy storage", Nature, volume 559, 556-563 (2018)
Non-patent Literature 2: D. Saritha, "Electrochemical analysis of tungsten bronze-type phases, W9Nb8O47 and W7Nb4O31, synthesized by sol-gel method", Materials Science & Engineering B 228 (2018) 218-223
Non-patent Literature 3: Antonio F. Fuentes et al., "Lithium and sodium insertion in W3Nb14O44, a block structure type phase", Solid State Ionics 93 (1997) 245-253
Non-patent Literature 4: Yan Lei ET AL: "W3Nb14O44 nanowires: Ultrastable lithium storage anode materials for advanced rechargeable batteries", Energy Storage Materials, vol. 16, 2018, pages 535-544.

Patent Literature 1: WO 2013140941 A1, SUMITOMO ELECTRIC INDUSTRIES [JP]
Patent Literature 2: CN 109244443 A

### Summary of Disclosure

### Technical Problem

An anode layer with high capacity durability has been required as an anode layer. The present disclosure has been made in view of the above circumstances, and a main object thereof is to provide an anode layer with high capacity durability.

### Solution to Problem

This object is solved by the subject matter of the independent claim. Further aspects are disclosed in the subclaim. In order to solve the above object, the present disclosure provides an anode layer comprising: an anode active material including a Nb element, a W element, and an O element; and a sulfide solid electrolyte.

According to the present disclosure, by using the anode active material including a Nb element, a W element, and an O element, an anode layer with high capacity durability may be obtained, even when coexisting with a highly reactive sulfide solid electrolyte.

In the disclosure, a composition of the anode active material is Nb₂WO₈ or Nb₂W₁₅O₅₀.

The present disclosure also provides an all solid state battery comprising a cathode layer, an anode layer, and a solid electrolyte layer formed between the cathode layer and the anode layer, and the anode layer is the above described anode layer.

According to the present disclosure, an all solid state battery with high capacity durability may be obtained by using the above described anode layer.

### Advantageous Effects of Disclosure

The anode layer in the present disclosure exhibits an effect of high capacity durability.

### Brief Description of Drawing

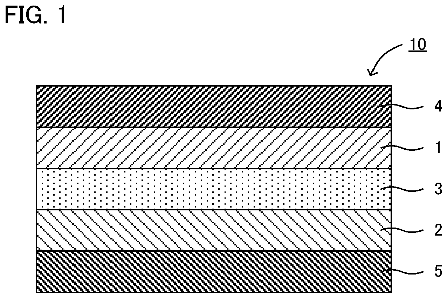

FIG. 1 is a schematic cross-sectional view illustrating an example of the all solid state battery in the present disclosure.

### Description of Embodiments

The anode layer and the all solid state battery in the present disclosure will be hereinafter described in detail.

### A. Anode layer

The anode layer in the present disclosure comprises an anode active material including a Nb element, a W element, and an O element; and a sulfide solid electrolyte.

According to the present disclosure, by using the anode active material including a Nb element, a W element, and an O element, an anode layer with high capacity durability may be obtained, even when coexisting with a highly reactive sulfide solid electrolyte. For example, in Non-Patent Literature 1, the performance of an active material is evaluated by producing a liquid based battery using Nb₁₆W₅O₅₅ and Nb₁₈W₁₆O₉₃ as active materials. Meanwhile, the liquid based battery using NWO as the active material tends to be low in capacity durability. A use of a sulfide solid electrolyte in an all solid state battery is also known; however, the sulfide solid electrolyte generally tends to be low in capacity durability since it is high in reactivity. In the present disclosure, in contrast to this, by using the anode active material including a Nb element, a W element, and an O element, an anode layer with high capacity durability may be obtained, even when coexisting with a highly reactive sulfide solid electrolyte.

### 1. Anode active material

The anode active material (NWO) in the present disclosure is an oxide active material including a Nb element, a W element, and an O element. Since NWO is an oxide, there is an advantage of high thermal stability. Also, NWO is relatively high in capacity, low in volume variation due to charge and discharge, and high in Li diffusion capability.

The molar ratio (Nb/W) of Nb element to W element is, for example, 0.13 or more, may be 0.50 or more, may be 0.89 or more, and may be 3.20 or more. If Nb/W is too small, good capacity durability may not be obtained. Meanwhile, the molar ratio (Nb/W) of Nb element to W element is, for example, 6.00 or less, may be 5.00 or less, and may be 4.67 or less.

The composition of the anode active material is not particularly limited, and examples may include NbₓW_{y}O_{z} (0 < x, 0 < y, 0 < z). When the valence of Nb is pentavalent and the valence of W is hexavalent, Z = (5x + 6y)/2 is satisfied. The x and y are, for example, 1 or more and 30 or less, respectively. The composition of the anode active material is Nb₂WO₈ or Nb₂W₁₅O₅₀.

The anode active material preferably has crystallinity. Examples of the crystal form of the anode active material may include monoclinic, tetragonal, and orthorhombic.

Examples of the shape of the anode active material may include a granular shape. The average particle size (D₅₀) of the anode active material is, for example, 0.1 um or more, and may be 1 um or more. Meanwhile, the average particle size (D₅₀) of the anode active material is, for example, 50 um or less, and may be 30 um or less. The average particle size (D₅₀) may be determined by an observation with a scanning electron microscope (SEM), for example. The number of the sample is preferably large; for example, 100 or more.

The proportion of the anode active material in the anode layer is, for example, 20 weight% or more, may be 30 weight% or more, and may be 40 weight% or more. Meanwhile, the proportion of the anode active material in the anode layer is, for example, 90 weight% or less, may be 80 weight% or less, and may be 60 weight% or less.

A method for producing the anode active material is not particularly limited. Examples of the method may include a method wherein a precursor is formed by conducting mechanical milling to a raw material mixture including a Nb oxide (such as NbO₂, Nb₂O₅) and a W oxide (such as WO₂, WO₃), and conducting a heat treatment to the precursor.

Examples of the mechanical milling may include ball milling, turbo milling, and disc milling. The mechanical milling may be a dry-type and may be a wet-type. Examples of a dispersing medium to be used in the wet-type mechanical milling may include alcohols such as ethanol. The conditions for the mechanical milling are appropriately arranged so as to obtain the desired anode active material.

The heat treatment temperature is, for example, 900°C or more and may be 1000°C or more. Meanwhile, the heat treatment temperature is, for example, 1400°C or less, and may be 1300°C or less. Also, the heat treatment time is appropriately arranged so as to obtain the desired anode active material. Examples of a heat treatment atmosphere may include an air atmosphere.

### 2. Sulfide solid electrolyte

The sulfide solid electrolyte includes at least a S element, and is a compound having ion conductivity. Examples of the sulfide solid electrolyte having lithium ion conductivity may include a solid electrolyte including a Li element, an X element (X is at least one kind of P, As, Sb, Si, Ge, Sn, B, Al, Ga, and In) and a S element. Also, the sulfide solid electrolyte may further include at least either one of an O element and a halogen element. Examples of the halogen element may include a F element, a Cl element, a Br element, and an I element.

The sulfide solid electrolyte may be a glass type sulfide solid electrolyte, may be a glass ceramic type sulfide solid electrolyte and may be a crystalline sulfide solid electrolyte. The glass type sulfide solid electrolyte may be obtained by amorphizing a raw material mixture. Examples of a method for amorphizing may include mechanical milling such as ball milling, and a melt-quenching method. Also, the glass ceramic type sulfide solid electrolyte may be obtained by, for example, heat treating the glass type sulfide solid electrolyte. Meanwhile, the crystalline sulfide solid electrolyte may be obtained by, for example, heat treating a raw material mixture.

The sulfide solid electrolyte is preferably provided with an ion conductor including a Li element, an A element (A is at least one kind of P, As, Sb, Si, Ge, Al and B) and a S element. Further, the ion conductor is preferably high in Li content. Also, the ion conductor preferably has an anion structure of an ortho composition (PS₄³⁻ structure, SiS₄⁴⁻ structure, GeS₄⁴⁻ structure, AlS₃³⁻ structure, and BS₃³⁻ structure) as the main component of the anion. The reason therefor is to allow a sulfide solid electrolyte to have high chemical stability. The proportion of the anion structure of an ortho composition with respect to all the anion structures in the ion conductor is, for example, 70 mol% or more and may be 90 mol% or more. The proportion of the anion structure of an ortho composition may be determined by methods such as a Raman spectroscopy, NMR, and XPS.

The sulfide solid electrolyte may contain lithium halide in addition to the ion conductor. Examples of the lithium halide may include LiF, LiCl, LiBr, and LiI; among them, LiCl, LiBr, and LiI are preferable. The proportion of LiX (X = F, I, Cl, and Br) in the sulfide solid electrolyte is, for example, 5 mol% or more and may be 15 mol% or more. Meanwhile, the proportion of LiX is, for example, 30 mol% or less and may be 25 mol% or less.

The sulfide solid electrolyte may have a crystal phase. Examples of the crystal phase may include a thio-LISICON type crystal phase, a LGPS type crystal phase and an argyrodite type crystal phase.

Examples of the shape of the sulfide solid electrolyte may include a granular shape. The average particle size (D₅₀) of the sulfide solid electrolyte is, for example, 0.1 um or more, and may be 1 um or more. Meanwhile, the average particle size (D₅₀) of the sulfide solid electrolyte is, for example, 50 um or less, and may be 30 um or less. The average particle size (D₅₀) may be determined by an observation with a scanning electron microscope (SEM), for example. The number of the sample is preferably large; for example, 100 or more. Also, the sulfide solid electrolyte preferably has high ion conductivity. The ion conductivity at 25°C is, for example, 1 × 10⁻⁵ S/cm or more, may be 1 × 10⁻⁴ S/cm or more and may be 1 × 10⁻³ S/cm or more.

The proportion of the sulfide solid electrolyte in the anode layer is, for example, 1 weight% or more, may be 10 weight% or more, and may be 20 weight% or more. Meanwhile, the proportion of the sulfide solid electrolyte in the anode layer is, for example, 60 weight% or less, and may be 50 weight% or less.

### 3. Anode layer

The anode layer may further include at least one of a conductive material and a binder, in addition to the anode active material and the sulfide solid electrolyte. Examples of the conductive material may include a carbon material, a metal particle, and a conductive polymer. Examples of the carbon material may include particulate carbon materials such as acetylene black (AB) and Ketjen black (KB); and fibrous carbon materials such as carbon fiber, carbon nanotube (CNT), and carbon nanofiber (CNF). Also, Examples of the binder may include rubber-based binders and fluorine-based binders.

The thickness of the anode layer is, for example, 0.1 um or more and 1000 um or less. The anode layer is preferably used for an all solid state battery. The all solid state battery will be described in detail in "B. All solid state battery".

A method for producing the anode layer is not particularly limited, and examples of the method may include a slurry method. In the slurry method, an anode layer is obtained by preparing a slurry including at least an anode active material, a sulfide solid electrolyte and a dispersing medium, coating the slurry on a base material, and drying thereof. Examples of the dispersing medium to be used for the slurry may include butyl butyrate, butyl acetate, dibutyl ether, and heptane. Examples of a method for coating the slurry may include a screen printing method, a gravure coating method, a die coating method, a doctor blade method, an inkjet printing method, a metal mask printing method, an electrostatic coating method, a dip coating method, a spray coating method, and a roll coating method. The base material to be coated with the slurry is not particularly limited, and examples may include an anode current collector, and a transfer sheet.

### B. All solid state battery

FIG. 1 is a schematic cross-sectional view illustrating an example of the all solid state battery in the present disclosure. All solid state battery 10 illustrated in FIG. 1 comprises cathode layer 1, anode layer 2 and solid electrolyte layer 3 formed between cathode layer 1 and anode layer 2. All solid state battery 10 comprises cathode current collector 4 for collecting currents of cathode layer 1, and anode current collector 5 for collecting currents of anode layer 2. Incidentally, all solid state battery 10 may comprise a known outer packing, although not particularly shown in the figure. In the present disclosure, anode layer 2 is the anode layer described in "A. Anode layer" above.

According to the present disclosure, an all solid state battery with high capacity durability may be obtained by using the above described anode layer.

### 1. Anode layer

The anode layer is a layer including at least an anode active material. The anode layer may be in the same contents as those described in "A. Anode layer" above; thus, the descriptions herein are omitted.

### 2. Cathode layer

The cathode layer is a layer including at least a cathode active material. Also, the cathode layer may include at least one of a solid electrolyte, a conductive material, and a binder, as necessary.

Examples of the cathode active material may include an oxide active material. Examples of the oxide active material to be used for a lithium ion battery may include rock salt bed type active materials such as LiCoO₂, LiMnO₂, LiNiO₂, LiVO₂, LiNi_{1/3}Co_{1/3}Mn_{1/3}O₂; spinel type active materials such as LiMn₂O₄, Li₄Ti₅O₁₂, and Li (Ni_{0.5}Mn_{1.5})O₄; and olivine type active materials such as LiFePO₄, LiMnPO₄, LiNiPO₄, and LiCoPO₄. The surface of the cathode active material may be coated with a Li ion conductive oxide. Examples of the Li ion conductive oxide may include LiNbOs, Li₄Ti₅O₁₂, and Li₃PO₄.

The proportion of the cathode active material in the cathode layer is, for example, 20 weight% or more, may be 30 weight% or more, and may be 40 weight% or more. Meanwhile, the proportion of the cathode active material is, for example, 80 weight% or less, may be 70 weight% or less, and may be 60 weight% or less.

The solid electrolyte to be used for the cathode layer is not particularly limited, and a sulfide solid electrolyte is preferable. Incidentally, the sulfide solid electrolyte, the conductive material and the binder may be in the same contents as those described in "1. Anode layer" above; thus, the description herein is omitted. The thickness of the cathode layer is, for example, 0.1 um or more and 1000 um or less.

### 3. Solid electrolyte layer

The solid electrolyte layer is a layer formed between the cathode layer and the anode layer, and is a layer including at least a solid electrolyte. Also, the solid electrolyte layer may include a binder as required. The solid electrolyte to be used for the solid electrolyte layer is not particularly limited, and a sulfide solid electrolyte is preferable. Incidentally, the sulfide solid electrolyte and the binder may be in the same contents as those described in "A. Anode layer" above; thus, the description herein is omitted. The thickness of the solid electrolyte layer is, for example, 0.1 um or more and 1000 um or less.

### 4. Other constitutions

The all solid state battery in the present disclosure comprises at least the above described anode layer, cathode layer, and solid electrolyte layer. Further, the all solid state battery usually comprises a cathode current collector for collecting currents of the cathode layer and an anode current collector for collecting currents of the anode layer. Examples of the material for the cathode current collector may include SUS, Ni, Cr, Au, Pt, Al, Fe, Ti, and Zn. Meanwhile, examples of the material for the anode current collector may include SUS, Cu, Ni, Fe, Ti, Co, and Zn. Incidentally, the thickness and the shape of the cathode current collector and the anode current collector are preferably selected appropriately according to the use application of the battery.

Also, the all solid state battery in the present disclosure may further include a confining jig that applies a confining pressure along the thickness direction, to the cathode layer, the solid electrolyte layer and the anode layer. A known jig may be used as the confining jig. The confining pressure is, for example, 0.1 MPa or more, may be 1 MPa or more, and may be 5 MPa or more. Meanwhile, the confining pressure is, for example, 100 MPa or less, may be 50 MPa or less, and may be 20 MPa or less.

### 5. All solid state battery

The all solid state battery in the present disclosure is preferably an all solid state lithium ion battery. Also, the all solid state battery in the present disclosure may be a primary battery and may be a secondary battery; above all, preferably the secondary battery so as to be repeatedly charged and discharged, and be useful as a car-mounted battery, for example. The secondary battery includes the use of the secondary battery as a primary battery (use for the purpose of the first charge only).

Also, the all solid state battery in the present disclosure may be a single cell battery and may be a stacked battery. The stacked battery may be a monopolar type stacked battery (a stacked battery connected in parallel), and may be a bipolar type stacked battery (a stacked battery connected in series). Examples of the shape of the all solid state battery may include a coin shape, a laminate shape, a cylindrical shape, and a square shape.

Incidentally, the present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### Examples

### [Reference Example 1]

### <Synthesis of active material>

As raw materials, NbO₂ (from Kojundo Chemical Lab. Co., Ltd.), and WO₂ (from Kojundo Chemical Lab. Co., Ltd.) were prepared and weighed so as the molar ratio of Nb and W to be Nb : W = 8 : 9. The weighed raw materials were added into a pot made of zirconia together with ethanol (purity of 99.95%) and zirconia balls (φ 5 mm), and mixed by a planetary ball mill (from Fritsch Japan Co., Ltd.). The ethanol and the zirconia balls were removed from the obtained mixture, the rest was added to a crucible made of alumina, and burned by using an electric furnace under conditions of 1200°C for 5 hours. The resultant was cooled naturally after burning, and after cooling, crushed in a mortar. The obtained crushed product was added into a pot made of zirconia together with ethanol (purity of 99.95%) and zirconia balls (φ 3 mm), and atomized by a planetary ball mill (from Fritsch Japan Co., Ltd.). Thereby, an active material (Nb₈W₉O₄₇) was obtained.

### <Production of working electrode>

Butyl butyrate, the obtained active material (Nb₈W₉O₄₇), a sulfide solid electrolyte (Li₂S-P₂S₅ based glass ceramic including LiI and LiBr, average particle size D₅₀ = 0.8 um), a conductive material (a vapor-grown carbon fiber, VGCF, from Showa Denko K. K.), and a butyl butyrate solution containing a PVDF based binder (manufactured by Kureha Corp.) of 5 weight% were added to a container made of PP (polypropylene) in the weight ratio of active material : sulfide solid electrolyte : conductive material : binder = 70.0 : 24.5 : 2.7 : 2.8.

Next, the PP container was stirred for 30 seconds by an ultrasonic dispersion apparatus (UH-50, from SMT Corp.). Next, the PP container was agitated for 30 minutes by an agitation mixer (TTM-1, from Sibata Scientific Technology LTD.), and stirred for 30 seconds by the ultrasonic dispersion apparatus. After further agitating for 3 minutes by the agitation mixer, the obtained slurry was coated on a current collector (Cu foil) by a blade method using an applicator. The resultant was dried naturally, and then, was dried at 100°C for 30 minutes on a hot plate to form an electrode layer. An electrode (working electrode) including a current collector and an electrode layer was obtained by punching the above into a circle of 1 cm².

### <Production of solid electrolyte layer>

Heptane, a sulfide solid electrolyte (Li₂S-P₂S₅ based glass ceramic including LiI and LiBr, average particle size D₅₀ = 2.5 µm), and a heptane solution containing a butylene rubber based binder (from JSR Corp.) of 5 weight% were added to a container made of PP. Next, the PP container was stirred for 30 seconds by an ultrasonic dispersion apparatus (UH-50, from SMT Corp.). Next, the PP container was agitated for 30 minutes by an agitation mixer (TTM-1, from Sibata Scientific Technology LTD.), and stirred for 30 seconds by the ultrasonic dispersion apparatus. After further agitating for 3 minutes by the agitation mixer, the obtained slurry was coated on a base material (Al foil) by a blade method using an applicator. The resultant was dried naturally, and then, was dried at 100°C for 30 minutes on a hot plate, and a solid electrode layer was formed by punching the above into a circle of 1 cm².

### <Production of evaluation cell>

The solid electrolyte layer was placed in a circular ceramic mold of 1 cm², and the product was pressed under the pressure of 1 ton/cm². Next, the working electrode was placed on one surface of the solid electrolyte layer, and the product was pressed under the pressure of 1 ton/cm². Next, a Li-In foil was placed as a counter electrode on the other surface of the solid electrolyte layer, and the product was pressed under the pressure of 6 ton/cm². Thereby, an evaluation cell was obtained.

### [Reference Example 2]

An active material (Nb₁₈W₁₆O₉₃) was obtained in the same manner as in Reference Example 1 except that the molar ratio of Nb and W was changed to Nb : W = 18 : 16 in molar ratio, and the burning temperature was changed to 1100°C. An evaluation cell was obtained in the same manner as in Reference Example 1 except that the obtained active material was used.

### [Example 3]

An active material (Nb₂WO₈) was obtained in the same manner as in Reference Example 1 except that the molar ratio of Nb and W was changed to Nb : W = 2 : 1 in molar ratio, and the burning temperature was changed to 1100°C. An evaluation cell was obtained in the same manner as in Reference Example 1 except that the obtained active material was used.

### [Reference Example 4]

An active material (Nb₁₆W₅O₅₅) was obtained in the same manner as in Reference Example 1 except that the molar ratio of Nb and W was changed to Nb : W = 16 : 5 in molar ratio. An evaluation cell was obtained in the same manner as in Reference Example 1 except that the obtained active material was used.

### [Reference Example 5]

An active material (Nb₁₄W₃O₄₄) was obtained in the same manner as in Reference Example 1 except that the molar ratio of Nb and W was changed to Nb : W = 14 : 3 in molar ratio. An evaluation cell was obtained in the same manner as in Reference Example 1 except that the obtained active material was used.

### [Example 6]

An active material (Nb₂W₁₅O₅₀) was obtained in the same manner as in Reference Example 1 except that the molar ratio of Nb and W was changed to Nb : W = 2 : 15 in molar ratio. An evaluation cell was obtained in the same manner as in Reference Example 1 except that the obtained active material was used.

### [Comparative Example 1]

An active material (Nb₈W₉O₄₇) was obtained in the same manner as in Reference Example 1. The obtained active material (Nb₈W₉O₄₇), a conductive material (acetylene black), and a N-methyl-2-pyrrolidone (NMP) solution containing a PVDF based binder (from Kureha Corp.) were weighed to be the weight ratio of active material : conductive material : binder = 90 : 8 : 2, and mixed until uniformly mixed. Thereby, slurry was obtained. The obtained slurry was coated on a current collector (Cu foil). After drying, an electrode (working electrode) including a current collector and an electrode layer was obtained by punching the above into a circle of 1 cm².

As a liquid electrolyte, the following solution was prepared; lithium hexafluorophosphate (LiPF₆) was dissolved, to be concentration of 1.1 mol/l, into a mixed solvent of ethylene carbonate (EC), dimethyl carbonate (DMC), and ethyl methyl carbonate (EMC) mixed to be EC : DMC : EMC = 30 : 40 : 30 in a weight ratio. Also, a Li foil was prepared as a counter electrode. An evaluation cell was produced by using these members.

### [Comparative Example 2]

An active material (Nb₁₈W₁₆O₉₃) was obtained in the same manner as in Reference Example 2. An evaluation cell was obtained in the same manner as in Comparative Example 1 except that the obtained active material was used.

### [Comparative Example 3]

An active material (Nb₂W₁₅O₅₀) was obtained in the same manner as in Example 6. An evaluation cell was obtained in the same manner as in Comparative Example 1 except that the obtained active material was used.

### [Evaluation]

A charge and discharge test was carried out to the evaluation cells obtained in Reference Examples 1, 2, 4 and 5, and Examples 3 and 6 and Comparative Examples 1 to 3. The evaluation cell was a half cell for evaluating the performance of an anode. The intercalation of Li into the active material and the voltage decrease of the evaluation cell were regarded as a charge, and the desorption of Li from the active material and the voltage increase of the evaluation cell were regarded as a discharge. Specifically, the evaluation cell was charged to 0.6 V vs. Li/Li⁺ by a CCCV charge, then, discharged to 3.0 V vs. Li/Li⁺ by a CCCV discharge, and the first time discharging capacity was determined. Then, the evaluation cell was charged to 0.6 V vs. Li/Li⁺ by a CCCV charge, then, discharged to 3.0 V vs. Li/Li⁺ by a CCCV discharge, and the second time discharging capacity was determined. The capacity durability was determined as the ratio of the second time discharging capacity with respect to the first time discharging capacity. The results are shown in Table 1, wherein Examples 1, 2, 4 and 5 are Reference Examples.

**[Table 1]**

| | Active material | Nb/W | 1^{st} discharging capacity (mAh/g) | 2^{nd} discharging capacity (mAh/g) | Capacity durability (2^{nd}/1^{st}) |
|---|---|---|---|---|---|
| Example 1 | Nb₈W₉O₄₇ | 0.89 | 282 | 257 | 91% |
| Example 2 | Nb₁₈W₁₆O₉₃ | 1.13 | 282 | 257 | 91% |
| Example 3 | Nb₂WO₈ | 2.00 | 292 | 268 | 92% |
| Example 4 | Nb₁₆W₅O₅₅ | 3.20 | 289 | 279 | 97% |
| Example 5 | Nb₁₄W₃O₄₄ | 4.67 | 279 | 271 | 97% |
| Example 6 | Nb₂W₁₅O₅₀ | 0.13 | 240 | 204 | 85% |
| Comp. Ex. 1 (liquid based) | Nb₈W₉O₄₇ | 0.89 | 271 | 230 | 85% |
| Comp. Ex. 2 (liquid based) | Nb₁₈W₁₆O₉₃ | 1.13 | 273 | 240 | 88% |
| Comp. Ex. 3 (liquid based) | Nb₂W₁₅O₅₀ | 0.13 | 204 | 173 | 85% |

As shown in Table 1, it was confirmed that the capacity durability was high in Reference Examples 1, 2, 4 and 5, and Examples 3 and 6. For example, although the same active material was used in Reference Example 1 and in Comparative Example 1, the discharging capacity (first time, second time) and the capacity durability were higher in Reference Example 1 than Comparative Example 1. In an all solid state battery, since a battery reaction occurs at a solid to solid interface, the proportion of a reaction field is lower than a liquid based battery. Therefore, the discharging capacity and the capacity durability tend to be low. However, the discharging capacity (first time, second time) and the capacity durability in Reference Example 1 were surprisingly higher than Comparative Example 1. This suggests that the active material and the sulfide solid electrolyte used in Reference Example 1 go well together. Also, although the same active material was also used in Reference Example 2 and in Comparative Example 2, the same tendency as Reference Example 1 and Comparative Example 1 was confirmed. Also, although the same active material was also used in Example 6 and in Comparative Example 3, the same tendency as Reference Example 1 and Comparative Example 1 was confirmed.

Also, in Reference Examples 1, 2, 4 and 5, and Example 3 (Nb/W ≥ 0.89), the capacity durability was higher than 90% and was higher than Example 6 (Nb/W = 0.13) in all cases. For the presumed mechanism for obtaining such effects, there is a possibility that, since the ion radius variation of Nb (pentavalent: 0.72 Å → trivalent: 0.64 Å) was larger than the ion radius variation of W (hexavalent: 0.6 Å → tetravalent: 0.66 Å) and Nb/W was large (a lot of Nb existed), the valence variation per Nb element was suppressed and structurally stabilized.

Also, in Reference Examples 4 and 5 (Nb/W ≥ 3.20), the capacity durability was 97% and was much higher than Example 6 (Nb/W = 0.13) in both cases. For the presumed mechanism for obtaining such effects, there is a possibility that, since Nb/W was large (a lot of Nb existed) as described above, the valence variation per Nb element was suppressed and structurally stabilized. Further, since the crystal form in Reference Example 4 (Nb₁₆W₅O₅₅) was monoclinic, tetragonal in Reference Example 5 (Nb₁₄W₃O₄₄), and orthorhombic in Reference Examples 1 and 2 and Example 3 and 6, it was suggested that the monoclinic crystal or the tetragonal crystal contributes to the improvement of the capacity durability.

### Reference Signs List

- 1: cathode layer
- 2: anode layer
- 3: solid electrolyte layer
- 4: cathode current collector
- 5: anode current collector
- 10: all solid state battery

## Claims

1. An anode layer comprising:
an anode active material including a Nb element, a W element, and an O element; and
a sulfide solid electrolyte, **characterized in that** a composition of the anode active material is Nb₂WO₈ or Nb₂W₁₅O₅₀.

2. An all solid state battery comprising a cathode layer, an anode layer, and a solid electrolyte layer formed between the cathode layer and the anode layer, and
the anode layer is the anode layer according to claim 1.

## Patentansprüche

1. Anodenschicht, umfassend:
ein Anodenaktivmaterial, das ein Nb-Element, ein W-Element und ein O-Element umfasst; und
einen Sulfid-Festelektrolyten, **dadurch gekennzeichnet, dass** eine Zusammensetzung des Anodenaktivmaterials Nb₂WO₈ oder Nb₂W₁₅O₅₀ ist.

2. Festkörperbatterie, umfassend eine Kathodenschicht, eine Anodenschicht und eine Festelektrolytschicht, die zwischen der Kathodenschicht und der Anodenschicht ausgebildet ist, und
die Anodenschicht die Anodenschicht nach Anspruch 1 ist.

## Revendications

1. Couche d'anode comprenant :
un matériau actif d'anode incluant un élément Nb, un élément W, et un élément O ; et
un électrolyte solide sulfuré, **caractérisée en ce qu'**une composition du matériau actif d'anode est Nb₂WO₈ ou Nb₂W₁₅O₅₀.

2. Batterie entièrement à semi-conducteur comprenant une couche de cathode, une couche d'anode, et une couche d'électrolyte solide formée entre la couche de cathode et la couche d'anode, et
la couche d'anode est la couche d'anode selon la revendication 1.
